# EUROPEAN PATENT APPLICATION

(11) **EP 1 215 903 A2**
(43) Date of publication of application: **19.06.2002**
(21) Application number: 01130107.4
(22) Date of filing: 18.12.2001
(51) Int. Cl.: H04N 7/16

(54) **Multiple signature authentication in conditional access systems**

(30) Priority: 18.12.2000 US 739982
(71) Applicant: GENERAL INSTRUMENT CORPORATION, Horsham, Pennsylvania 19044 (US)
(72) Inventor: Kimball, Bridget D., Encinitas, CA 92024 (US); Miller, Kenneth P., Poway, CA 92064 (US); Petty, Douglas M., San Diego, CA 92127 (US); Eisenbart, Robert S., Chula Vista, CA 91910 (US); Sprunk, Eric J., Carlsbad, CA 92009 (US)
(74) Representative: Bohnenberger, Johannes, Dr.

(57) **Abstract**

The invention relates to authenticating information sent to a set top box. In one embodiment, a process for distributing information to a plurality of conditional access receivers with a plurality of different signature checking capabilities is disclosed. In one step, a first signature is generated over the information and a second signature is generated over the information. The first and second signatures and the information are sent to the plurality of conditional access receivers.

## Description

This application claims the benefit of U.S. Application No. 09/493,984 filed on January 28, 2000.

### BACKGROUND OF THE INVENTION

This invention relates in general to conditional access systems and, more specifically, to authenticating information sent to a set top box.

Cable television (TV) providers distribute content to users. Conditional access (CA) systems distribute video programming from a headend of the cable TV provider to a set top box associated with a user. The headend includes hardware that receives video and distributes it to the set top boxes within the CA system. Select set top boxes are allowed to decode certain video programs according to entitlement information sent by the cable TV provider to the set top box.

Multiple system operators (MSO) typically have users with many different set top boxes. These set top boxes could be from different manufacturers or different models from the same manufacturers. Different security algorithms are supported in different set top boxes. Distribution of video to these set top boxes from a common source presents problems because of the different security algorithms.

### SUMMARY OF THE INVENTION

The invention relates to authenticating information sent to a set top box. In one embodiment, a process for distributing information to a plurality of conditional access receivers with a plurality of different signature checking capabilities is disclosed. In one step, a first signature is generated over the information and a second signature is generated over the information. The first and second signatures and the information are sent to the plurality of conditional access receivers.

Reference to the remaining portions of the specification, including the drawings and claims, will realize other features and advantages of the present invention. Further features and advantages of the present invention, as well as the structure and operation of various embodiments of the present invention, are described in detail below with respect to the accompanying drawings.

### BRIEF DESCRIPTION OF THE DRAWINGS

Fig. 1 is a block diagram showing one embodiment of a conditional access system;
Fig. 2 is a block diagram illustrating another embodiment of a conditional access system;
Fig. 3A is a block diagram depicting an embodiment of an authorization message;
Fig. 3B is a block diagram depicting another embodiment of the authorization message;
Fig. 4 is a block diagram showing an embodiment of a software message;
Fig. 5 is a block diagram illustrating an embodiment of a signatory group that includes portions of the authorization message and the software message;
Fig. 6 is a flow diagram depicting an embodiment of a process for sending an authorization message and a software message to a set top box; and
Fig. 7 is a flow diagram showing an embodiment of a method for processing an authorization message and a software message.

### DESCRIPTION OF THE SPECIFIC EMBODIMENTS

The present invention authenticates information sent to a television set top box. In one embodiment, a conditional access system allows for multiple signatures where each signature can independently authenticate a source of a message. Set top boxes with different signature algorithms are supported by including signatures on each message for each of the different signature algorithms.

In the Figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

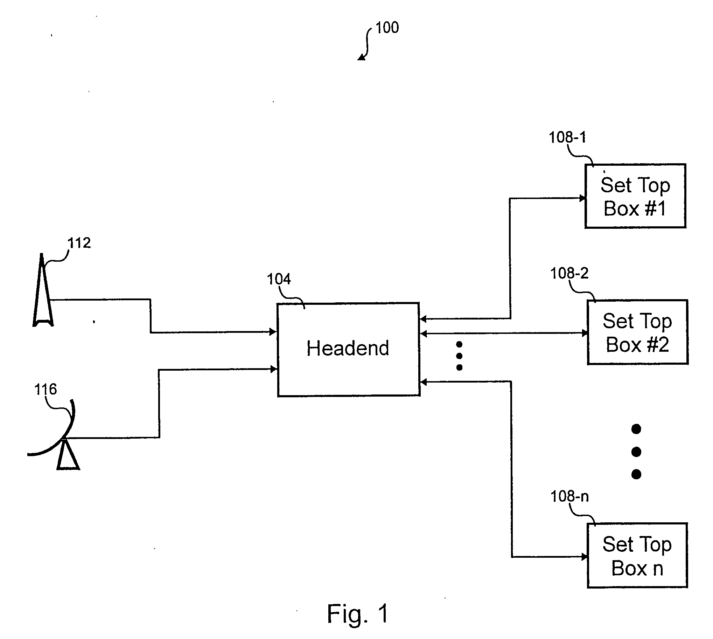

Referring first to Fig. 1, a block diagram of one embodiment of a conditional access (CA) system 100 is shown. The CA system 100 selectively provides content to a number of users based upon certain conditions being satisfied. Included in the system are a headend 104, number of set top boxes 108, local programming receiver 112, and satellite dish 116.

The headend 104 receives content and distributes that content to users. Content can include video, audio, interactive video, software, firmware, and/or data. Distributing firmware content allows updating the embedded programs within the set top box 108. This content is received from a variety of sources which include the satellite dish 116, local programming receiver 112, microwave receivers, packet switched networks, etc. Each set top box 108 has a unique address that allows sending entitlement information to an individual set top box 108. In this way, one set top box 108-1 can entitle a particular content while another 108-2 cannot. Equipment within the headend 104 regulates which set top boxes 108 are entitled to which content.

The content is generally distributed in digital form through an analog channel that contains multiple content streams. All the content streams are statistically multiplexed together, for example, into a digital stream modulated upon the analog carrier channel. The separate content streams are separated by packet identification (PID) information such that the individual content streams can be removed according to their unique PID information. There are around one hundred and twenty analog channels in this embodiment of the system 100. Other embodiments could distribute the content with satellite dishes, microwave antennas, RF transmitters, packet switched networks, cellular data modems, carrier current, or phone lines.

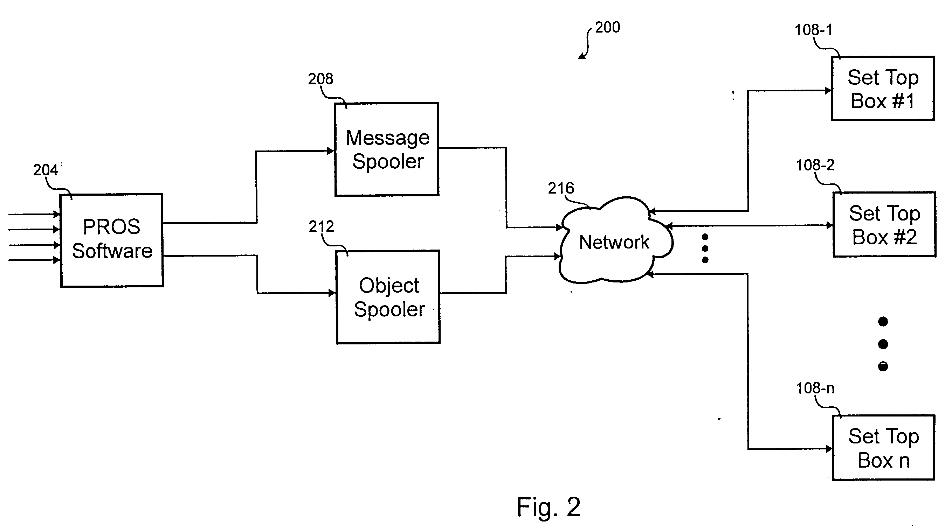

Referring next to Fig. 2, a block diagram of another embodiment of a CA system 200 is illustrated. This embodiment 200 shows the software objects 204, 208, 212 that receive the content and distribute it to the set top boxes 108. These software objects 204, 208, 212 could reside in the headed 104. Included in the CA system 200 are a permissions, resource, object signatory (PROS) software 204; a message spooler 208; an object spooler 212; a distribution network 216; and a number of set top boxes 108.

The PROS software 204 receives information from various sources and produces authorization and software messages with that information. Things such as software access requirements, resource access requirements, configuration data, unsigned software objects, object information, etc. are received and processed by the PROS software 204. The resource access requirements indicate which set top box hardware resources can be accessed by the software object. Included in the configuration data is the domain identifier of the cable provider and the signing key(s). The object information contains the identification and version information of the software object. All this information is processed by the PROS software to produce the authorization and software messages. At this point, the messages are complete except for checksums.

The message and object spoolers 208, 212 respectively receive the authorization and software messages and stores them. After adding a checksum, the messages are sent to the set top boxes 108. Even though these messages are broadcast to a number of set top boxes 108, addressing individual domain identifiers and set top box identifiers allows selecting a subset of the set top boxes 108 to receive the messages. The spoolers 208, 212 queue the messages, segment and format them for transport and couple them to the network 216. As the messages are sent out to the network 216, the spoolers 208, 212 calculate a checksum for each message and append that checksum to the end of the message.

The network 216 transports the messages from the message and object spoolers 208, 212 to the set top boxes 108. The network 216 could include a control data channel, MPEG data stream and/or packet switched network. The control data channel is an out of band data channel that contains configuration and control information. Messages sent in a MPEG data stream are multiplexed on an analog carrier channel where the messages are distinguished by unique PIDs. The packet switched network could be the Internet, a network and/or a telephone line connection.

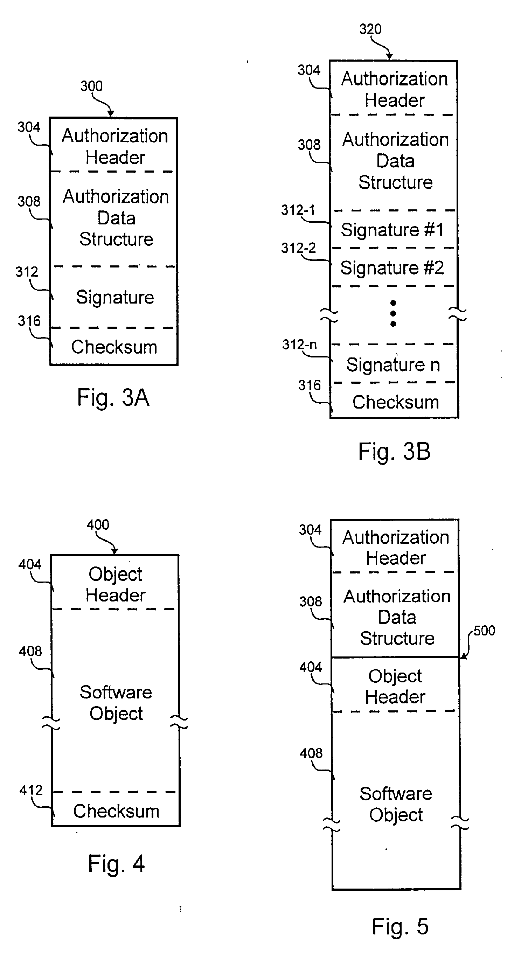

With reference to Figs. 3A-5, authorization messages 300, 320, a software message 400 and a signatory group 500 are respectively shown in block diagram form. Included in the two embodiments of the authorization message 300, 320 of Figs. 3A-3B are an authorization header 304, an authorization data structure 308, one or more signatures 312, and a first checksum 316. The authorization messages 300, 320 alternatively have information used to both authenticate and authorize the software message 400.

The embodiment of Fig. 3A has a single signature 312 and the embodiment of Fig. 3B has a number of signatures 312. The multiple signature embodiment of Fig. 3B allows having different signatures for systems with set top boxes 108 with different signature algorithms or for systems with multiple levels of signature security. The set top box selects the signature to use when authenticating the signatory group 500. If a signatory group 500 does not have a signature 312 the set to box 108 understands, the software message 400 is discarded in this embodiment.

Forming the software message of Fig. 4 are an object header 404, a software object 408 and a second checksum 412. The software message 400 serves as the transport for the software object 408. The signatory group 500 includes components of the authorization message 300 and software message 400 arranged end-to-end. The signature 312 is calculated over the whole signatory group 500. More specifically, the signatory group 500 of Fig. 5 includes the authorization header 304, authorization data structure 308, object header 404, and software object 408.

The authorization header 304 indicates the configuration of the authorization messages 300, 320. Included in the header 304 are a subtype identifier and message version. The subtype identifier distinguishes the various types of authorization messages 300, 320 from one another. In this embodiment, there are authorization message subtypes corresponding to software objects and resources. Software object subtypes have a corresponding software message 400, but resource subtypes do not. Accordingly, the subtype identifier is used to determine if there is a software message 400 associated with an authorization message. There may be several types of software object subtypes and resource subtypes for a given system and the message version allows distinguishing the various types.

The authorization data structure 308 provides authorization information to the set top box 108. In the case of an authorization message subtype corresponding to a software object, the authorization data structure 308 contains an object identifier, a software version, cost information, entitlement information, lifetime information, and one or more program tiers. The object identifier is unique for each software object 408 and allows attributing an authorization message to its corresponding software message 400. Version information is included in the data structure 308 to indicate the version of the software object 408.

Portions of the authorization data structure 308 are used to determine availability of the software object 408 to the set top box 108. The cost information indicates to the set top box 108, and sometimes the user, the price associated with the software object 408. Entitlement information is used to determine if the particular set top box 108 is authorized to accept the software object 408. The entitlement information may include a key if the software object 408 is encrypted with a symmetric key. If the set top box 108 is not authorized for the software object, there is no need to process the corresponding software object 408 when it is received. Lifetime information allows expiring of the authorization of the software object 408 to prevent use after a certain date or time. Programming tiers are used to restrict authorization of software objects 408 to predefined tiers such that a set top box 108 can only access software objects 408 within a predetermined tier.

The signature(s) 312 are used to verify that portions of both the authorization message 300 and corresponding software message 400 are authentic. A hash function such as SHA-1 or MD5 is run over the whole signatory group, whereafter the result is run through a signing algorithm such as RSA, ECC and DSA to produce the signature. Alternatively, a simple CRC algorithm could be used for the hash function, whereafter the result could be sent through an encryption algorithm such as triple-DES or DES to produce the signature.

When compiling the authorization message 300, the PROS software 204 calculates the signature 312 over the whole signatory group 500 before inserting the signature 312 into the authorization message 300. Some embodiments could include a number of signatures 312. The PROS software 204 calculates all the signatures 312 for the set top boxes 108 deployed in the system that may receive the signatory group 500 and appends those signatures 312 onto the authorization message 300.

The set top box 108 calculates the signature of the signatory group 500 upon receipt of both the authorization and software messages 300, 400. Once the signature is calculated, it is checked against the received signature to authenticate portions of both the authorization and software messages 300, 400. Where there are a number of signatures 312 in the authorization message 300, 320, the proper signature 312 is chosen for checking authentication. If the signatures do not match, the set top box 108 discards the software message 400 because it presumably came from an improper source or was corrupted in transit.

The first and second checksums 316, 412 are calculated with either linear or non-linear algorithms. These checksums 316, 412 verify the integrity of the data as it is transported to the set top box 108 over the network 216. For example, the checksum could be a cyclic redundancy check (CRC) which performs a binary addition without carry for each byte in the message to produce a CRC value. The message spooler 208 calculates the checksum 316 as the message 300 is being sent and appends the checksum 316 onto the end of the message 300. Conversely, the set top box 108 calculates the checksum as the message 300 is received and checks the calculated checksum against the checksum 316 in the received message 300. If the calculated and received checksums do not match, an error in transmission has occurred. Messages 300, 400 with errors are discarded whereafter the set top box 108 waits for the headend 104 to send replacement messages 300, 400.

The object header 404 includes attributes for the software message 400. Included in the object header 404 are a header length, a software object length, the object identifier, the software version, and a domain identifier. The header length and software object length respectively indicate the lengths of the object header 404 and the software object 408. As described above, the object identifier provides a unique code that allows attributing the authorization message 300, 320 to the software message 400. The software version indicates the version of the software object. Different cable providers are assigned domain identifiers such that all of the set top boxes 108, which might receive a software object 408, can screen for software objects 408 associated with their domain.

The software object 408 includes content the system 200 is designed to deliver to set top boxes 108. Several types of information can be embedded in a software object, such as executable programs, firmware upgrades, run-time programs (e.g., Java® or ActiveX®), programming schedules, billing information, video, audio, or data. The software object can be used immediately after authentication and authorization or at a later time. Additionally, authorization can be programmed to expire after a certain amount of time.

Referring specifically to Fig. 5, the signatory group 500 is shown. This group 500 is comprised of parts of both the authorization message 300, 320 and the software message 400. All the data used to calculate the signature 312 is included in the signatory group 500. Because the signature requires components from both the authorization message 300 and the software message 400, a failed signature check indicates one of the authorization message 300 and the software message 400 cannot be verified as originating from a trusted source. The trusted source being the PROS software 204 that generated the signature 312.

Some of the information in the authorization message 300 and software message may be encrypted. In this embodiment, the headers 304, 404, signature(s) 312 and checksums 316 are clear text while the remainder is encrypted. By controlling the encryption keys, additional authentication and authorization security measures can be used.

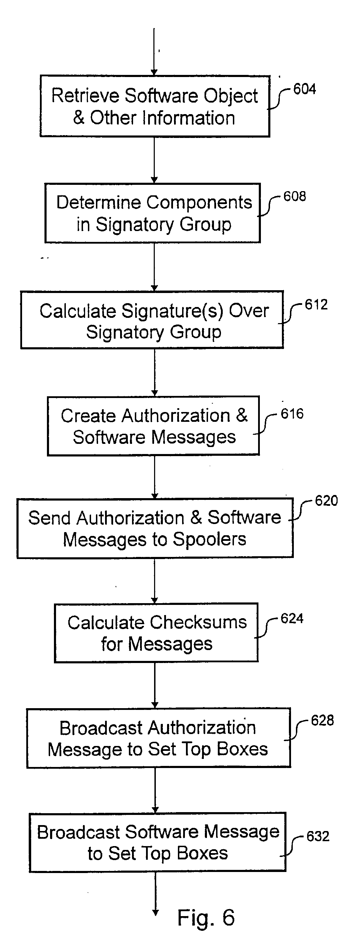

With reference to Fig. 6, a flow diagram of a process for broadcasting a software object 408 is shown. This process uses the PROS Software 204 to compile the information and create a signature or signatures 312 whereafter the authorization message 300 and corresponding software message 400 are sent to their respective spoolers 208, 212. Preferably, the authorization messages 300, 320 and software message 400 are sent through different transmission channels at different times to make authentication more robust.

The process begins in step 604 where the software object 408 and other information are loaded into the PROS software 204. This information includes such things as software access requirements, resource access requirements, configuration data, unsigned software objects, object information, etc. In step 608, the PROS software 204 determines the components of the signatory group 500. Once the signatory group 500 is determined, the signature 312 over that group 500 is calculated in step 612. More than one signature could be calculated in this step 612 to support different set top boxes 108.

Once the signature or signatures 312 are calculated, the authorization and software messages 300, 400 are created in step 616. At this point, the authorization and software messages 300, 400 are complete except for the checksums 316, 412. In step 620, the authorization and software messages 300, 400 are respectively sent to the message and object spoolers 208, 212. Once the spoolers 208, 212 receive the authorization and software messages 300, 400, the checksums 316, 412 are calculated to complete all fields in the messages 300, 400.

After the authorization and software messages 300, 400 are complete, they are separately sent to the set top boxes 108. In step 628, the authorization message 300 is broadcast to the set top boxes 108 over a network 216. The network 216 could include a control data channel, MPEG data stream and/or packet switched network. After the authorization message 300, 312 is sent, the software message 400 is broadcast in step 632. A predetermined time delay may be used between steps 628 and 632 to separate the authorization message 300, 312 from the software message 400. In this embodiment, the authorization message 300, 312 and software message 400 are sent through different transmission pathways. The authorization message 300, 312 is sent over an out-of-band control data channel and the software message 400 is sent through a multiplexed MPEG data stream.

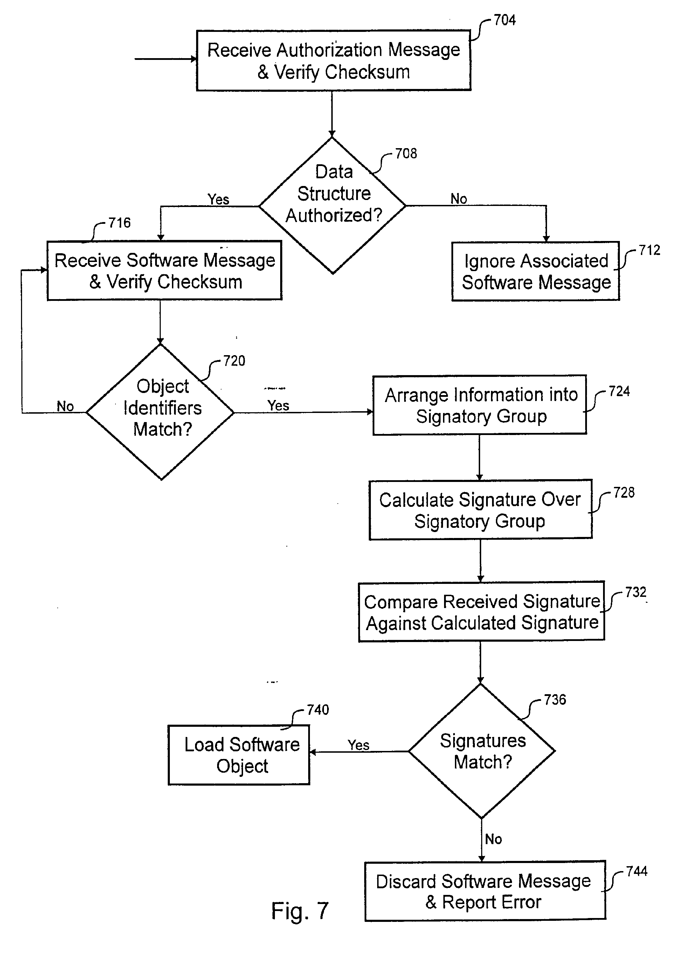

Referring next to Fig. 7, a flow diagram is shown that verifies, authenticates and authorizes a software object 408. This process is performed on each set top box 108 that receives the authorization and software messages 300, 400 even if the software object 408 is not authorized and cannot be executed.

The process begins in step 704 where the authorization message 300, 312 is received from the network 216. After receipt of the message 300, the first checksum 316 is verified to trap broadcast errors. A threshold determination is made to decide if the software object 408 is authorized in step 708. Things such as cost information, entitlement information, lifetime information, and a program tier is used in this determination. If it is determined that the software object 408 is not authorized, the corresponding software message 400 is ignored when it arrives in step 712.

Alternatively, processing continues to step 716 if the software object 408 is determined authorized in step 708. In step 716, the software message 400 is received and the second checksum 412 is verified to trap any transmission errors. The object identifiers in the authorization message 300, 320 and software message 400 are compared to match together the messages in step 720. If there is no match, the software message 400 is discarded and processing continues back to step 716 to wait for the correct software message 400.

If the software message 400 has an object identifier which matches the object identifier of the authorization message 300, 320, processing continues to step 724 where the information is arranged into a signatory group 500. Most of the information in the authorization message 300,320 and software message 400 is used to form the signatory group 500.

In step 728, a signature is calculated over the signatory group 500. The set top box 108 may have the capability of producing one or more signatures on the signatory group 500. A determination is made to determine which of the signatures 312 that arrived with the authorization message 320 are capable of being checked. At least one of the signatures is calculated in step 728. Once the signature is calculated by the set top box 108, it is compared with the proper received signature 312 in step 732. Some embodiments could be programmed to choose one of the signatures 312 every time for certain kinds of authorization messages 300, 320. Other embodiments could check multiple signatures 312 with each signatory group 500 to enhance authentication.

If the calculated and received signatures match, as determined in step 736, the software object 408 is authenticated as originating from an approved source and has not been changed since being signed. Authenticated software objects 408 are retained and used by the set top box in step 740. If the software object fails authentication in step 736, the software message 400 is discarded and an error is reported back to the headend 104. By using this process, software objects are verified, authorized and authenticated before use.

In light of the above description; a number of advantages of the present invention are readily apparent. For example, the use of multiple signatures allows for supporting different set top boxes with different signature checking capabilities. Also, the use of multiple signatures allows designing multiple levels of security.

A number of variations and modifications of the invention can also be used. For example, different signature methods could be used which include symmetric and asymmetric using different key sizes. Some embodiments could encrypt the authorization and software messages to further enhance authentication and use entitlement messages to provide the keys.

In some embodiments, multiple signatures could be used to provide multiple levels of security. For example, the system could require every signature to be checked to authenticate a source. Set top boxes would be given the signature capability according to their security level. An authorization message that included signatures a set top box could not verify would prevent use of the associated software message.

Although the invention is described with reference to specific embodiments thereof, the embodiments are merely illustrative, and not limiting, of the invention, the scope of which is to be determined solely by the appended claims.

## Claims

1. A method for distributing information to a plurality of conditional access receivers with a plurality of different signature checking capabilities, the method comprising:
generating a first signature over the information;
generating a second signature over the information;
sending the first and second signatures to the plurality of conditional access receivers; and
sending the information to the plurality of conditional access receivers.

2. Method according to claim 1, further comprising:
receiving the first signature associated with the information at a conditional access receiver;
receiving the second signature associated with the information at the conditional access receiver;
determining a signature checking capability of the conditional access receiver;
choosing one of the first and second signatures;
calculating a third signature over the information; and
comparing the third signature to one of the first and second signatures.

3. Method according to claim 1 or 2, further comprising:
generating a checksum over at least the information; and
sending the checksum to the plurality of conditional access receivers.

4. Method according to one of the preceding claims, wherein the sending of the first and second signatures and sending the information comprise sending the same message.

5. Method according to one of the preceding claims, wherein:
the plurality of conditional access receivers includes a first and second conditional access receivers;
the first conditional access receiver uses a first signature algorithm different from a second signature algorithm used by the second conditional access receiver.

6. Method according to one of the preceding claims, wherein the information comprises a software object.

7. Method according to one of the preceding claims, wherein the information comprises authorization information.

8. A method for distributing information to a plurality of conditional access receivers with a plurality of different signature checking capabilities, comprising:
receiving a first signature associated with a message at a conditional access receiver;
receiving a second signature associated with the message at the conditional access receiver;
choosing one of the first and second signatures;
calculating a third signature over the message; and
comparing the third signature to one of the first and second signatures.

9. Method according to claim 8, further comprising:
generating the first signature over the message at a location remote to the conditional access receiver;
generating the second signature over the message at the location remote to the conditional access receiver;
sending the first and second signatures to the plurality of conditional access receivers; and
sending the message to the plurality of conditional access receivers.

10. Method according to claims 8 to 9, further comprising determining a signature checking capability of the conditional access receiver.

11. Method according to one of claims 8 to 10, wherein the third signature corresponds to a security level that excludes one or more of the plurality of conditional access receivers from the security level.

12. Method according to one of claims 8 to 11 further comprising generating a checksum over at least the message.

13. Method according to one of claims 8 to 12, further comprising:
calculating a fourth signature over the message; and
comparing the fourth signature to one of the first and second signatures.

14. A computer message stream embodied in at least one carrier wave for providing for authentication of the computer message stream, comprising:
a data segment comprising an object;
a first signature segment comprising a first signature over the data segment; and
a second signature segment comprising a second signature over the data code segment.

15. Computer message according to claim 14, further comprising an authorization segment comprising authorization information for the object.

16. Computer message according to claims 14 or 15, further comprising an integrity segment comprising a string characteristic of the object and other portions of the computer message stream.

17. Computer message according to one of claims 14 to 16, wherein the data segment is sent at a different time than at least one of the first and second signature segments.

18. Computer message according to one of claims 14 to 17, wherein the data segment is coupled to a first carrier wave and at least one of the first and second signature segments is coupled to a second carrier wave.
